# EUROPÄISCHE PATENTANMELDUNG

(11) **EP 1 365 003 A1**
(43) Veröffentlichungstag der Anmeldung: **26.11.2003**
(21) Anmeldenummer: 03017141.7
(22) Anmeldetag: 10.10.2000
(51) Int. Cl.: C10B 53/00, C10J 3/66, B09B 3/00

(54) **Verfahren zum Ablaufen einer Vorrichtung zur Entsorgung und Nutzbarmachung von Abfallgütern**

(30) Priorität: 12.10.1999 DE 19949142
(62) Teilanmeldung aus: 00969477.9
(71) Anmelder: THERMOSELECT AKTIENGESELLSCHAFT, FL-9490 Vaduz (LI)
(72) Erfinder: Kiss, Günter H., 6648 Minusio (CH)
(74) Vertreter: Pfenning, Meinig & Partner GbR

(57) **Zusammenfassung**

Die vorliegende Erfindung bezieht sich auf ein Verfahren sowie eine Vorrichtung zur Stoffaufbereitung, -wandlung und -nachbehandlung von Entsorgungsgut aller Art mit mehreren thermischen Behandlungsstufen. Die Behandlungsstufen umfassen eine Niedertemperaturstufe unter Sauerstoffabschluß sowie eine Hochtemperaturstufe unter Sauerstoffzufuhr bei Temperaturen über 1000 °C. Die Hochtemperaturstufe weist dabei eine Stabilisierungszone und einen Auslaß für das in der Hochtemperaturstufe, insbesondere der Stabilisierungszone erzeugte Gasgemisch. In der Stabilisierungszone sind Vorrichtungen zum Einspeisen von Sauerstoff und Brennstoff vorgesehen mit denen beim Anfahren des Prozesses zum Aufheizen der Hochtemperaturzone Brennstoff und überstöchiometrisch Sauerstoff eingedüst werden. Die Abgase werden dann über mindestens ein Ventil über einen Schornstein direkt abgeleitet.

## Beschreibung

Die vorliegende Erfindung bezieht sich auf ein Verfahren und eine Vorrichtung zur Entsorgung und Nutzbarmachung von Abfallgütern aller Art, bei dem unsortierter, unbehandelter, beliebige Schadstoffe in fester und/oder flüssiger Form enthaltender Industrie-, Haus- und/oder Sondermüll sowie Industriegüterwracks einer stufenweisen Temperaturbeaufschlagung und thermische Trennung bzw. Stoffumwandlung unterzogen werden.

Insbesondere bezieht sich die Erfindung auf ein Verfahren zum An- bzw. Abfahren des Entsorgungsprozesses und der hierzu eingesetzten Anlage.

Weiterhin bezieht sich die vorliegende Erfindung auf eine für das obige Verfahren geeignete Vorrichtung.

Die bekannten Verfahren der Abfallentsorgung bilden keine befriedigende Lösung der wachsenden Müllprobleme, die ein wesentlicher Faktor der Umweltzerstörung sind. Industriegüterwracks aus Verbundwerkstoffen, wie Kraftfahrzeuge und Haushaltsgeräte aber auch Öle, Batterien, Lacke, Farben, toxische Schlämme, Medikamente und Krankanhausabfälle, unterliegen gesonderten, gesetzlich streng vorgeschriebenen Entsorgungsmaßnahmen.

Hausmüll hingegen ist ein unkontrolliertes heterogenes Gemisch, das nahezu alle Arten von Sondermüllfraktionen und organischen Bestandteilen enthalten kann und ist bezüglich der Entsorgung noch in keinem Verhältnis zu seiner Umweltbelastung eingestuft.

Eines der Entsorgungs- und Verwertungsverfahren für Abfallgüter ist die Müllverbrennung. Bei den bekannten Müllverbrennungsanlagen durchlaufen die Entsorgungsgüter ein breites Temperaturfeld bis zu ca. 1000 ° C. Bei diesen Temperaturen sollen mineralische und metallische Reststoffe nicht aufgeschmolzen werden, um nachfolgende Gaserzeugungsstufen möglichst nicht zu stören. Die den verbleibenden Feststoffen innewohnende Energie wird nicht oder nur mangelhaft genutzt.

Eine kurze Verweilzeit des Mülls bei höheren Temperaturen und die hohe Staubentwicklung durch die Vorgabe großer Mengen stickstoffreicher Verbrennungsluft in die unverdichteten Abfallverbrennungsgüter begünstigen die gefährliche Bildung von chlorierten Kohlenwasserstoffen. Man ist deshalb dazu übergegangen, die Abgase von Müllverbrennungsanlagen einer Nachverbrennung bei höheren Temperaturen zu unterziehen. Um die hohen Investitionen solcher Anlagen zu rechtfertigen, werden die abrasiven und korrosiven heißen Abgase mit ihrem hohen Staubanteil durch Wärmetauscher geleitet. Bei der relativ langen Verweilzeit im Wärmetauscher bilden sich erneut chlorierte Kohlenwasserstoffe, die sich mit den mitgeführten Stäuben verbinden und letztlich zu Verstopfungen und Funktionsstörungen führen und als hochgiftige Schadstoffe entsorgt werden müssen. Folgeschäden und die Kosten ihrer Beseitigung sind nicht abschätzbar.

Bisherige Pyrolyseverfahren in konventionellen Reaktoren haben ein der Müllverbrennung ähnlich breites Temperaturspektrum. In der Entgasungszone herrschen hohe Temperaturen. Die sich bildenden heißen Gase werden zur Vorwärmung des noch nicht pyrolysierten Entsorgungsgutes genutzt, kühlen hierbei ab und durchlaufen ebenfalls den für die Neubildung chlorierter Kohlenwasserstoffe relevanten und damit gefährlichen Temperaturbereich. Um ein ökologisch bedenkenlos nutzbares Reingas herzustellen, durchlaufen Pyrolysegase im Regelfall vor der Reinigung einen Cracker.

Gemeinsam weisen die vorbeschriebenen Verbrennungsund Pyrolyseverfahren den Nachteil auf, dass sich die bei der Verbrennung oder pyrolytischen Zersetzung verdampften Flüssigkeiten oder Feststoffe mit den Verbrennungs- oder Pyrolysegasen vermischen und abgeleitet werden, bevor sie die zur Zerstörung aller Schadstoffe notwendige Temperatur und Verweilzeit im Reaktor erreicht haben. Das verdampfte Wasser ist nicht zur Wassergasbildung nutzbar gemacht. Deshalb werden im Regelfall bei Müllverbrennungsanlagen Nachverbrennungskammern und bei Pyrolyseanlagen Crackerstufen nachgeschaltet.

Aus der EP 91 11 8158.4 ist ein Verfahren zur Entsorgung und Nutzbarmachung von Abfallgütern bekannt, das die oben geschilderten Nachteile vermeidet. Dabei werden die Abfallgüter einer stufenweisen Temperaturbeaufschlagung und thermischen Trennung bzw. Stoffumwandlung unterzogen und die anfallenden festen Rückstände in eine Hochtemperaturschmelze überführt. Hierzu wird das zu entsorgende Gut chargenweise zu Kompaktpaketen komprimiert und durchläuft die Temperaturbehandlungsstufen in Richtung steigender Temperatur von einer Niedertemperaturstufe, in der unter Aufrechterhaltung der Druckbeaufschlagung ein formund kraftschlüssiger Kontakt mit den Wänden des Reaktionsgefäßes sichergestellt ist und organische Bestandteile entgast werden, zu einer Hochtemperaturzone, in der das entgaste Entsorgungsgut eine gasdurchlässige Schüttung ausbildet und durch kontrollierte Zugabe von Sauerstoff Synthesegas erzeugt wird. Dieses Synthesegas wird dann aus der Hochtemperaturzone abgeleitet und kann weiter verwertet werden.

Diese Ableitung des Rohsynthesegases des Hochtemperaturreaktors ist ihrerseits fest mit einer Gaskammer zur Gasschnellkühlung verbunden, die eine Wasserinjektionseinrichtung für Kaltwasser in den heißen Rohsynthesegasstrom besitzt. Diese Gasschnellkühlung (Schockkühlung) verhindert eine erneute Synthese von Schadstoffen, da das Rohsynthesegas durch die Schockkühlung den kritischen Temperaturbereich sehr rasch durchläuft und auf eine Temperatur abgekühlt wird, bei der eine Neusynthese der Schadstoffe nicht mehr stattfindet. Diese Kaltwasserinjektion in den Rohsynthesegasstrom bindet zusätzlich im Gasstrom mitgeführte Flüssigkeits- oder Feststoffpartikel, so dass nach der Schnellkühlung ein gut vorgereinigtes Rohsynthesegas erhalten wird.

Diese in der EP 91 11 8158.4 beschriebene Anlage wird bisher so in Betrieb genommen, dass zuerst der Hochtemperaturreaktor aus dem kalten Zustand ohne Abfalleintrag aufgeheizt wird. Hierzu werden in den Hochtemperaturreaktor Brennstoff, z.B. Erdgas, und O₂ eingespeist und verbrannt. Die dabei entstehenden Abgase werden aus dem Hochtemperaturreaktor über die Gasschnellkühlung und ein Wasserschloss in eine Brennkammer mit Kamin gegeben, wo die Abgase unter Sauerstoffzwangszufuhr nachverbrannt werden. Erst bei dieser Nachverbrennung wird eine weitgehende Emissionsfreiheit der Gase insbesondere ein ausreichend niedriger Gehalt an Kohlenmonoxid (CO) erzielt, so dass diese dann über einen Kamin abgeleitet werden können.

Bei Erreichen einer Temperatur des Hochtemperaturreaktors von über 1000° C wird kurzzeitig zusätzlich Brennstoff, z.B. Erdgas, in den Hochtemperaturreaktor eingebracht, und der Abgaspfad wird bei dem Wasserschloss auf den Reinigungspfad für das Synthesegas umgeschaltet. Erst anschließend erfolgt dann ein Abfalleintrag in die Niedertemperaturstufe des Hochtemperaturreaktors. Dieser Abfall wird in der Niedertemperaturstufe weitgehend entgast und anschließend aus diesem Entgasungskanal in die Hochtemperaturstufe eingetragen. Während dieses Eintrags wird die Zugabe von Erdgas aufrechterhalten, um schnell eine stabile Synthesegasproduktion zu erhalten. Das gereinigte Synthesegas wird dann im Mischgasbetrieb mit Erdgas genutzt.

Wenn die erzeugte Synthesegasmenge ausreichend groß ist, wird der Eintrag von Brenngasen in den Hochtemperaturreaktor beendet. Entscheidend bei diesem Anfahrprozess ist, dass die zwangsluftversorgte Brennkammer während des Aufwärmens die vollständige Oxidation der Methan- und Kohlenmonoxidrestanteile zu CO₂ und H₂O-Dampf sichert, die dann mit dem Luftüberschuss den Kamin verlassen können.

Das Abfahren der thermischen Linie ist nach dem Stand der Technik mit einem Druckabfall auf Grund der sich stark vermindernden Synthesegasproduktion verbunden. Das entstehende Restsynthesegas wird im Mischbetrieb mit zugegebenem Erdgas weiter genutzt. Erst nach dem Ausschmelzen der Festkörperschüttung im Hochtemperaturreaktor wird der Gasweg in Richtung der Synthesegasnutzung geschlossen und in Richtung der Gasreinigung geschlossen und zur Brennkammer geöffnet. Auch in diesem Falle erfolgt eine zwangsluftversorgte Verbrennung der restlichen Abgase in der Brennkammer, so dass die Abgase aus der Brennkammer weitgehend emissionsfrei, insbesondere CO-arm bzw. CO-frei, über einen Kamin abgeleitet werden können.

Nachteilig bei diesem Verfahren des An- bzw. Abfahrens des Hochtemperaturreaktors ist, dass während des Aufheizens beim Anfahren bzw. während des Ausschmelzens beim Abfahren die entstehenden Gase aus der Hochtemperaturzone des Reaktors in einer Brennkammer unter Zwangsluftversorgung nachverbrannt werden müssen.

Aufgabe der vorliegenden Erfindung ist es daher, ein Verfahren und eine Vorrichtung vorzuschlagen, mit denen der erfindungsgemäße Entsorgungs- und Nutzbarmachungsprozess auf einfache und günstige Weise abgefahren werden kann.

Diese Aufgabe wird durch das Verfahren nach Anspruch 1 gelöst. Vorteilhafte Weiterbildung des erfindungsgemäßen Verfahrens werden in den jeweiligen abhängigen Ansprüchen gegeben.

Das erfindungsgemäße Verfahren schließt sich an das in der EP 91 11 8158.4 offenbarte Verfahren an, wobei bezüglich des Verfahrens und der Vorrichtung die Offenbarung dieser Druckschrift hiermit vollständig in den Offenbarungsgehalt dieser Anmeldung eingeschlossen wird. Das dort beschriebene Verfahren und die dort beschriebene Vorrichtung werden erfindungsgemäß nunmehr dadurch weitergebildet, dass in der Stabilisierungszone des Hochtemperaturreaktors Vorrichtungen zum Einspeisen von Sauerstoff und Brennstoff, beispielsweise Kombinationsbrenner, vorgesehen sind und der Auslass für das in der Hochtemperaturzone erzeugte Gasgemisch über mindestens ein Ventil mit einem Schornstein, einer Brennkammer mit Kamin und/oder einer Einrichtung zur Nutzung des Gases verbindbar ist. Erfindungsgemäß wird dabei beim Anfahren des Prozesses zum Aufheizen der Temperaturzone in die Hochtemperaturzone Brennstoff und Sauerstoff in die Stabilisierungszone eingedüst, so dass die brennbaren Gasbestandteile, die eingespeist werden oder die sich auch während des An- bzw. Abfahrprozesses bilden können, im Stabilisierungsbereich des Hochtemperaturreaktors vollständig verbrannt werden. Dadurch weisen die aus dem Stabilisierungsbereich des Hochtemperaturreaktors austretenden Gase keine relevanten Emissionen, insbesondere Kohlenmonoxid CO, mehr auf und können unmittelbar über das Ventil direkt in einen Schornstein abgeleitet werden. Diese Direktleitung wird jedoch nur beim An- bzw. Abfahren genutzt.

Diese Gase können jedoch auch vor der Ableitung über einen Schornstein bzw. Kamin auch in einer Brennkammer nachverbrannt werden.

Beim An- bzw. Abfahren im Stabilisierungsbereich wird mit Sauerstoffüberschuss gearbeitet (λ>1), vorteilhafterweise derart, dass der Restsauerstoffgehalt im Abgas 5 Vol.% beträgt.

Die Brennkammer mit Kamin wird folglich fast nur noch für Störfälle benötigt. Sie ist daher im wesentlichen eine Sicherheitseinrichtung, die gewährleistet, dass selbst im Störfall alle Prozessgase notfalls vollständig verbrannt und abgeleitet werden können.

Vorteilhafterweise ist im Schornstein eine Behördenmessstelle installiert, mit der die Schadstoffkonzentrationen im Abgas kontinuierlich gemessen werden können. Auch die Schadstoffe der Abgase, die sich beim An- und Abfahren bilden können, werden dann gemessen.

Vorteilhafterweise entspricht der Schornstein, über den die Abgase beim An- bzw. Abfahren direkt abgeleitet werden, dem Kamin, der mit der Brennkammer verbunden ist.

Ist der Anfahrbetrieb beendet und das Prozessgleichgewicht erreicht, wird das oben genannte Ventil, das bisher die Abgase direkt zu dem Schornstein geleitet hat, geschlossen, so dass nunmehr der Synthesegasstrom über die Feinstwaschkolonne und den Aktivkohlefilter geleitet und anschließend der Synthesegasnutzung zugeführt wird.

Im folgenden soll nun beispielhaft das erfindungsgemäße Anfahren des Entsorgungsprozesses beschrieben werden.

Zu Beginn des Anfahrprozesses werden sämtliche zukünftig Synthesegas führenden Leitungen durch Fluten mit Stickstoff inertisiert. Auch die Direktleitung zum Schornstein wird grundsätzlich aus Sicherheitsgründen inertisiert, auch wenn in ihr keine brennbaren Gase transportiert werden.

Das Ventil, das hinter dem Quenchwäscher angeordnet ist, wird so eingestellt, dass alle Gase bzw. Abgase aus dem Hochtemperaturreaktor direkt in den Schornstein geleitet werden. Dazu werden über Kombinationsbrenner in die Stabilisierungszone im Hochtemperaturreaktor Brenngase, wie beispielsweise Erdgas oder Synthesegas, eingeleitet, wobei Sauerstoff überstöchiometrisch so zudosiert wird, dass im Abgas ein Restsauerstoffgehalt von 5 % enthalten ist.

Um zu verhindern, dass die heiße Atmosphäre in den leeren Entgasungskanal der Niedertemperaturstufen gelangt und das Kanalmaterial beschädigen kann, wird auch der Entgasungskanal mit Stickstoff geflutet, um eine thermische Stickstoffbarriere gegenüber den Gasen in dem Hochtemperaturreaktor aufzubauen.

Beträgt im Hochtemperaturreaktor, gemessen im Abgasstrom, auf Grund des Aufheizprozesses mindestens 750 ° C, so wird in den zwischenzeitlich ebenfalls aufgeheizten Entgasungskanal Müll geschoben, bis der Kanal gefüllt ist. Durch den Mülleintrag können nun thermische und/oder chemische Prozesse ablaufen, wie beispielsweise die Bildung von Wasserdampf durch Trocknung des Mülls bzw. die teilweise Entgasung der organischen Müllbestandteile. Diese Prozesse werden auch bei der Sauerstoffzudosierung berücksichtigt, da bei der Entgasung sowohl in fester als auch in gasförmiger Form Kohlenwasserstoffverbindungen entstehen können, die anschließend im Hochtemperaturreaktor zu CO und H₂ vergast werden.

Hat die Abgastemperatur mindestens 900° C erreicht, so wird der Gasweg zum Schornstein geschlossen und der Gasweg zum Aktivkohlefilter und zur Brennkammer mit Kamin geöffnet. Das Ventil hinter dem Quenchwäscher wird geschlossen, so dass im folgenden die Abgase das Inertgas aus der Gasreinigung und dem Aktivkohlefilter in die Brennkammer mit Kamin pressen.

Daraufhin wird die Eindüsung von Sauerstoff in den Stabilisierungsbereich beendet und kurzzeitig Erdgas im Überschuss eingeleitet, um den im Stabilisierungsbereich befindlichen überschüssigen Sauerstoff zu entfernen. Lediglich im Schmelzbereich werden die Sauerstofflanzen weiterhin zur Sauerstoffzufuhr genutzt, um den gebildeten festen Kohlenstoff in der Feststoffschüttung zu vergasen.

Durch den Überschuss an Brenngas beträgt der Sauerstoffanteil im Gasgemisch nach kurzer Zeit null Prozent, wobei die Sauerstoffgrenzschwellenmessung aktiviert wird. Der Anteil brennbarer Gase im Gasgemisch nimmt in der Folge aufgrund der Entgasungsprozesse in den Niedertemperaturstufen zu, wobei diese brennbaren Gase vollständig in der Brennkammer mit Kamin verbrannt werden.

Ist ein stabiler Anteil brennbarer Gase erreicht, was über die Helligkeit der Flamme in der Brennkammer bestimmt werden kann, so wird der Gasstrom auf den Kessel umgeleitet, um hier thermisch genutzt zu werden. Der Gasweg zur Brennkammer mit Kamin wird geschlossen. Mit zunehmendem Synthesegasstrom werden auch andere Synthesegasverbraucher, wie beispielsweise Gasgeneratoren, eingesetzt.

Damit ist der Anfahrprozess abgeschlossen.

Das Abfahren des Entsorgungsprozesses verläuft in umgekehrter Reihenfolge zu dem Anfahren des Prozesses.

Zu Beginn des Abfahrens befindet sich in dem Hochtemperaturreaktor-Unterteil eine Feststoffsäule, deren Kohlenstoffanteil durch Zugabe von Sauerstoff vergast und deren anorganische Bestandteile aufgeschmolzen werden. Die anorganische Schmelze wird anschließend in einem Homogenisierungsreaktor thermisch weiterbehandelt.

Im Stabilisierungsbereich oberhalb der Feststoffsäule werden alle langkettigen Kohlewasserstoffverbindungen bei Temperaturen über 1000° C gecrackt und alle organischen Verbindungen zerstört. Es wird lediglich Synthesegas erzeugt, wobei sich diese Produktion im thermischen und chemischen Gleichgewicht befindet. Das Synthesegas wird schockgekühlt (gequencht), gereinigt und feinstgereinigt und durchläuft anschließend einen Aktivkohlefilter und steht zur Nutzung, beispielsweise in einem Gasmotor und/oder Kessel, zur Verfügung.

Um diesen Zustand nun zu beenden, wird zuerst die Müllzufuhr in die Niedertemperaturstufen (Kanal) beendet und die Kanalbeheizung heruntergefahren. Dennoch wird weiterhin die Feststoffsäule in dem Hochtemperaturreaktor weiter vergast bzw. aufgeschmolzen.

Durch den beendeten Mülleintrag reduziert sich die erzeugte Synthesegasmenge kontinuierlich, wobei die Verbraucher (Gasmotoren und/oder Kessel od. dgl.) entsprechend sukzessive von der Anlage weggenommen werden.

Nach Abbau der Feststoffsäule wird die Sauerstoffdosierung im Schmelzbereich der Feststoffsäule gedrosselt.

Reicht die Synthesegasmenge nicht mehr aus, um den letzten Synthesegasverbraucher zu bedienen, so wird das Ventil hinter der Quenchwäsche in Richtung der Synthesegasnutzung geschlossen und die Direktgasleitung zum Schornstein geöffnet. Damit durch den Schornstein lediglich emissionsarme Abgase in die Umwelt entlassen werden, werden die Sauerstoffdüsen im Stabilisierungsbereich des Hochtemperaturreaktors geöffnet, so dass Restspuren von brennbaren Gaskomponenten vollständig verbrannt und im Abgas ein Restsauerstoff von 5 % gegeben ist. Damit ist das Abgas weitgehend frei von Schadstoffemissionen, insbesondere von CO.

Ist der Ent- und Vergasungsprozess der restlichen, in dem Kanal befindlichen Müllmenge abgeschlossen und die Schmelze im Homogenisierungsreaktor erstarrt, so wird die Sauerstoffdosierung im Stabilisierungsbereich kontinuierlich reduziert, bis schließlich der Abfahrprozess abgeschlossen ist.

Erfindungsgemäß wird damit erreicht, dass sowohl beim Anfahren als auch beim Abfahren der Entsorgungsanlage die aus dem Hochtemperaturreaktor ausströmenden Gase unmittelbar über einen Schornstein in die Umwelt entlassen werden können, wobei diese Abgase ökologisch völlig unbedenklich sind, da sie auf Grund des Sauerstoffüberschusses während der Verbrennung und in den Abgasen praktisch schadstofffrei sind. Durch diese Anordnung entfallen lange Wege der Abgase und die Benetzung einer separaten Brennkammer während des Aufheizens und während des Abfahrens der Anlage. Die Brennkammer mit Kamin kann damit nahezu ausschließlich für Störfälle und als Sicherheitseinrichtung verwendet werden, die im normalen Betrieb kaum zum Einsatz kommt.

Es zeigt
- Fig. 1: das Schema einer erfindungsgemäßen Vorrichtung, und
- Fig. 2: eine weitere erfindungsgemäße Vorrichtung.

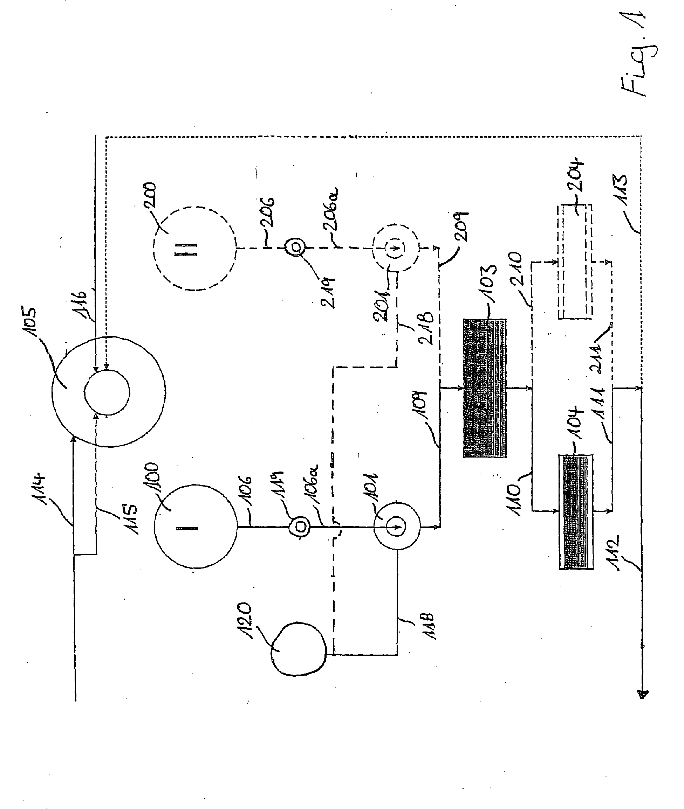

Figur 1 zeigt eine Vorrichtung, bei der zwei erfindungsgemäße Hochtemperaturreaktoren I und II, die mit den Bezugszeichen 100 und 200 versehen sind, parallel geschaltet sind. Aus diesen Hochtemperaturreaktoren 100, 200 werden über Rohsynthesegasleitungen 106, 106a, 206, 206a die in der Stabilisierungszone der jeweiligen Hochtemperaturreaktoren entstehenden Rohsynthesegase abgeleitet. Die Synthesegase werden dabei über eine Schnellabkühlung 119 bzw. 219 (Quench) geleitet, in der Kühlwasser in die Gase eingesprüht wird, um die Gase sehr rasch unter 100° C abzukühlen und zugleich von Festpartikeln zu reinigen. Durch diese rasche Abkühlung wird eine erneute Synthese von Schadstoffen verhindert. Die so abgekühlten und gereinigten Gase werden über ein Ventil 101 bzw. 201 einem basischen Wäscher 103 zugeleitet und anschließend über Leitungen 110 , 210 auf Aktivkohle-/-koksfilter 104, optional auch einen weiteren Aktivkohle-/-koksfilter 204, geleitet. In diesen Aktivkohlefiltern findet eine weitere Feinreinigung des Rohsynthesegases statt, das anschließend über Leitungen 111, 211 zur weiteren Nutzung geleitet wird. Die Leitungen 111 bzw. 211 sind dabei zum einen mit einer Leitung 112 verbunden, die das gereinigte Synthesegas zu Einrichtungen zur Synthesegasnutzung leitet. Derartige Einrichtungen können beispielsweise Kessel oder Gasmotoren sein. Auch eine chemische Weiterverarbeitung des Synthesegases ist möglich.

Weiterhin stehen die Leitungen 111 und 211 über eine Leitung 113 mit einer Brennkammer 105 mit Kamin in Verbindung. Im Falle von Störungen bzw. kurzfristigen Überproduktionen von Synthesegas kann das entstehende Synthesegas über die Leitung 113 zu der Brennkammer 105 mit Kamin geleitet werden und dort umweltfreundlich verbrannt und über den Kamin in die Umwelt abgeleitet werden. Die Brennkammer mit Kamin ist insbesondere für derartige Störungen jederzeit einsatzbereit.

Dieser Brennkammer 105 werden über Leitungen 114 und 115 sowohl Kühlluft als auch Verbrennungsluft bzw. über eine Leitung 116 Brenngase, wie beispielsweise Erdgas, zugeführt, um jederzeit eine vollständige und ökologisch unbedenkliche Verbrennung des über die Leitung 113 zugeführten Synthesegases zu ermöglichen. Die Zwangsluftzuführung zu der Brennkammer 105 mit Kamin ist dabei permanent vorhanden, redundant und notstromberechtigt, um den Notfallbetrieb zu jedem Zeitpunkt zu gewährleisten.

Im Synthesegasstrom hinter der Schnellabkühlung 119 bzw. 219 befindet sich ein Ventil 101 bzw. 201, mit dem der Synthesegasstrom auf Leitungen 118 bzw. 218 umgelegt werden kann. Diese Leitungen 118 und 218 führen direkt zu einem Schornstein 120, über den der Gasstrom aus dem Hochtemperaturreaktor 100 und 200 in die Umwelt entlassen wird. Diese beiden Leitungen 118 bzw. 218 werden dann zugeschaltet, wenn beim Anfahren bzw. beim Abfahren die in den Hochtemperaturreaktoren 100 bzw. 200 entstehenden bzw. dort eingedüsten brennbaren Gase innerhalb der Hochtemperaturreaktoren mit einem Sauerstoffüberschuss in Höhe von 5 % im Abgas verbrannt werden. Dabei werden in den Hochtemperaturreaktoren 100 und 200 sämtliche organischen Bestandteile voll verbrannt, wobei die Schnellabkühlung 119 bzw. 219 verhindert, dass beim Abkühlen der Gase Schadstoffe neu entstehen. Daher ist das in der An- bzw. Abfahrphase der Hochtemperaturreaktoren 100 bzw. 200 entstehende Abgas schadstoffarm und kann über die Ventile 101 bzw. 201 und die Leitung 118 bzw. 218 direkt über den Schornstein 120 in die Umwelt entlassen werden.

Getrennte Leitungen, um die während der An- bzw. Abfahrphase entstehenden Abgase in die Brennkammer 105 mit Kamin zu leiten, sind daher nicht mehr erforderlich.

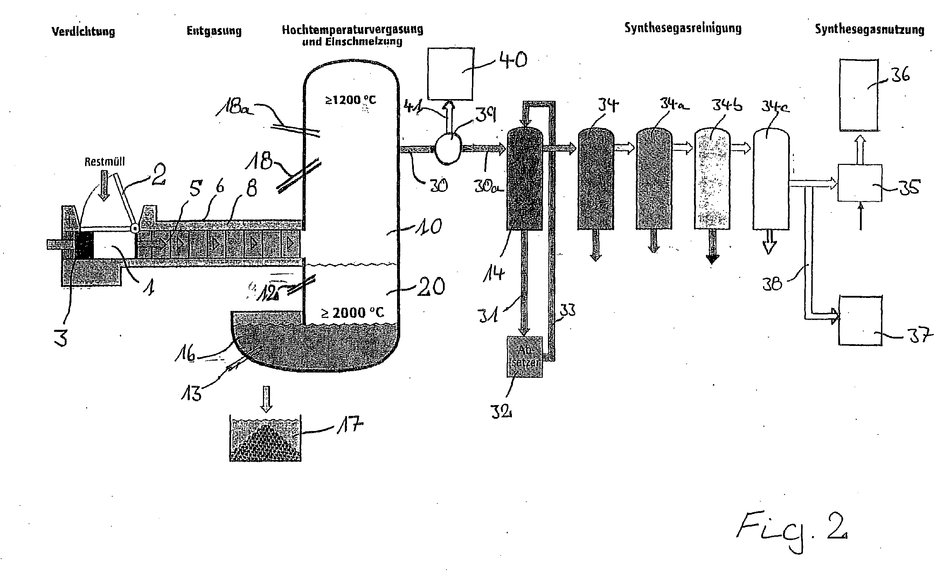

Figur 2 zeigt das Schaubild einer Anlage mit einem Hochtemperaturreaktor 10.

In Figur 2 ist gezeigt, wie Restmüll in eine Verdichtungspresse eingebracht wird. Dabei erfolgt die Verdichtung durch eine Verdichtungspresse 1, die in ihrem Aufbau einer an sich bekannten Schrottpresse entspricht, wie sie z.B. für die Verschrottung von Fahrzeugen eingesetzt wird. Eine schwenkbare Pressplatte 2 ermöglicht das Beschicken der Presse 1 mit Mischabfall. Eine Pressfläche 3 befindet sich in linker Position, so dass der Beschickungsraum der Presse voll geöffnet ist. Durch das Einschwenken der Pressplatte 2 in die dargestellte horizontale Position wird der Abfall zunächst in vertikaler Richtung verdichtet. Danach bewegt sich die Pressfläche 3 horizontal in die in ausgezogener Linienführung dargestellte Lage und verdichtet das Abfallpaket in horizontaler Richtung. Die hierzu benötigten Gegenkräfte werden durch eine nicht dargestellte aus- und einfahrbare Gegenplatte aufgenommen. Nachdem der Verdichtungsvorgang abgeschlossen ist, wird die Gegenplatte ausgefahren und der verdichtete Abfallpfropfen mit Hilfe der sich nach rechts weiterbewegenden Pressfläche 3 in einen unbeheizten Bereich 5 des Schubofens 6 eingeschoben und so dessen Gesamtinhalt entsprechend weitertransportiert, nachverdichtet und mit der Kanal- bzw. Ofenwand in Druckkontakt gehalten. Anschließend wird die Pressfläche 3 in die linke Endposition zurückgefahren, die Gegenplatte eingefahren und die Pressplatte 2 in die gestrichelt dargestellte Vertikalposition zurückgeschwenkt. Die Verdichtungspresse 1 ist für eine Neubeschickung bereit. Die Abfallverdichtung ist so groß, dass der in den unbeheizten Bereich 5 des Schubofens 6 eingeschobene Abfallpfropfen gasdicht ist. Die Beheizung des Schubofens erfolgt durch Flamm- und/oder Abgase, die einen Heizmantel 8 in Pfeilrichtung durchströmen.

Beim Durchschub des verdichteten Abfalls durch den Ofenkanal 6 breitet sich eine entgaste Zone zur Mittelebene des Schubofens 6 hin aus, begünstigt durch die mit dem Seiten/Höhen-Verhältnis >2 seines Rechteckquerschnittes verbundene große Oberfläche. Beim Eintritt in einen Hochtemperaturreaktor 10 liegt ein durch ständige Druckbeaufschlagung beim Durchschub kompaktiertes Gemisch von Kohlenstoff, Mineralien, Metallen und teilzersetzten vergasungsfähigen Komponenten vor. Dieses Gemisch wird im Bereich der Eintrittsöffnung in den Hochtemperaturreaktor 10 extrem großer Strahlungshitze ausgesetzt. Die hiermit verbundene plötzliche Expansion von Restgasen im Schwelgut führt zu dessen stückiger Zerteilung. Das so erhaltene Feststoff-Stückgut bildet im Hochtemperaturreaktor ein gasdurchlässiges Bett 20, in dem der Kohlenstoff des Schwelgutes mit Hilfe von Sauerstofflanzen 12 zunächst zu CO₂ bzw. CO verbrannt wird. Die oberhalb des Bettes 20 den Reaktor 10 verwirbelt durchströmenden Schwelgase werden durch Cracken vollständig entgiftet. Zwischen C, CO₂, CO und dem aus dem Abfall ausgetriebenen Wasserdampf stellt sich ein temperaturbedingtes Reaktionsgleichgewicht bei der Synthesegasbildung ein. Im oberen Teil des Hochtemperaturreaktors 10, der folglich einen Stabilisierungsbereich der Synthesegasbildung bildet, befinden sich Brennstoffdüsen 18 und Sauerstoffdüsen 18a, gegebenenfalls als Kombinationsbrenner, um während des Anfahrens des Reaktors bzw. während des Abfahrens des Reaktors Brennstoffe und/oder Sauerstoff, wie oben beschrieben, in den Reaktor einzudüsen. Dieses Rohsynthesegas wird über Rohsynthesegasleitungen 30 und 30a zu einem Behälter bzw. Kammer 14 geleitet, in dem das Synthesegas durch Wassereindüsung auf weniger als 100° C schockartig gekühlt wird. Im Gas mitgeschleppte Bestandteile (Mineralien und/oder Metall in geschmolzenem Zustand) werden im Kühlwasser abgeschieden, Wasserdampf kondensiert, so dass sich das Gasvolumen verringert und so die Gasreinigung erleichtert wird, die sich an die Schockkühlung in an sich bekannten Anordnungen anschließen kann. Das zur schockartigen Kühlung des Synthesegasstromes verwendete Wasser kann gegebenenfalls nach Aufreinigung wiederum zur Kühlung verwendet und folglich im Kreislauf geführt werden. Bei der Schnellabkühlung des Rohsynthesegases durch Einsprühen von Kühlwasser in den Rohsynthesegasstrom werden nicht nur Flüssigbestandteile und Feststoffbestandteile (Stäube etc.) aus dem Rohsynthesegas entfernt, sondern das Kühlwasser nimmt zusätzlich auch Gasbestandteile aus dem Rohsynthesegas auf. Dies erfolgt beispielsweise durch Emulgieren von feinsten Gasbläschen in dem Kühlwasser bzw. durch Lösung von Gasen aus dem Rohsynthesegas. In dem mehr als 2000° C heißen Kernbereich des Bettes 20 werden die mineralischen und metallischen Bestandteile des Schwelgutes aufgeschmolzen. Aufgrund der unterschiedlichen Dichte überschichten sie sich dabei und entmischen sich. Typische Legierungselemente des Eisens, wie beispielsweise Chrom, Nickel und Kupfer, bilden mit dem Eisen des Abfalls eine verhüttbare Legierung, andere Metallverbindungen, beispielsweise Aluminium, oxidieren und stabilisieren als Oxide die Mineralschmelze.

Die Schmelzen treten direkt in einen Nachbehandlungsreaktor 16 ein, in dem sie in einer mit Hilfe einer O₂-Lanze 13 eingebrachten Sauerstoffatmosphäre, gegebenenfalls unterstützt durch nicht dargestellte Gasbrenner, Temperaturen von mehr als 1400° C ausgesetzt werden. Mitgeschleppte Kohlenstoffpartikel werden oxidiert, die Schmelze wird homogenisiert und in ihrer Viskosität erniedrigt.

Bei ihrem gemeinsamen Austrag in ein Wasserbad 17 granulieren Mineralstoff und Eisenschmelze getrennt und können danach magnetisch sortiert werden.

Das Kühlwasser wird aus dem Behälter 14 über eine Leitung 31 in einen Beruhigungsbereich, hier einen Lamellenklärer 32, geleitet, wo die in ihm enthaltenen Feststoffe, z.B. Schwebebestandteile, sich absetzen. Das so aufgereinigte Kühlwasser wird über eine Leitung 33 in den Behälter 14 wieder zur Kühlung des Rohsynthesegases eingesetzt und folglich in einem Kreislauf geführt. Das gereinigte Rohsynthesegas verlässt den Behälter 14, um anschließend einer Feinwäsche bzw. Feinreinigung in Wäschern 34, 34a, 34b, 34c unterzogen zu werden.

Die so fein gereinigten Synthesegase können über eine Leitung 38 der Nutzung, beispielsweise in einem Gasgenerator 37, zugeführt werden oder auch im Störungsfalle einer Brennkammer 35 mit Kamin 36 zugeführt werden, wo sie unter Zwangsluftzufuhr ökologisch unbedenklich verbrannt und entsorgt werden können.

Die erfindungsgemäße Vorrichtung weist weiterhin ein Ventil 39 auf, das über eine Leitung 41 mit einem Schornstein 40 verbunden ist. Dieses Ventil 39 ist in der Figur 2 zwischen dem Hochtemperaturreaktor 10 und der Kammer 14 für die Schnellabkühlung angeordnet.

Wie oben beschrieben, können beim Anfahren und beim Abfahren des Prozesses die entstehenden Abgase aus dem Hochtemperaturreaktor über das Ventil 39 direkt dem Schornstein 40 zugeführt werden, wobei jedoch darauf zu achten ist, dass die Abgase einen Sauerstoffüberschuss im Bereich von 5 Vol.% enthalten. In diesem Falle ist die direkte Entsorgung der Abgase über den Kamin 40 ökologisch unbedenklich.

Der Kamin 40 kann dabei selbstverständlich auch mit dem Kamin 36 identisch sein, so dass nur ein Kamin benötigt wird.

## Patentansprüche

1. Verfahren zur Entsorgung und Nutzbarmachung von Abfallgütern aller Art, bei dem unsortierter, unbehandelter, beliebige Schadstoffe in fester und/oder flüssiger Form enthaltender Industrie-, Haus- und/oder Sondermüll sowie Industriegüterwracks einer stufenweisen Temperaturbeaufschlagung und thermischen Trennung bzw. Stoffumwandlung unterzogen werden und die anfallenden festen Rückstände in eine Hochtemperaturschmelze überführt werden, wobei das Entsorgungsgut, chargenweise zu Kompaktpaketen komprimiert, die Temperaturbehandlungsstufen in Richtung steigender Temperatur mit mindestens einer Niedertemperaturstufe unter Sauerstoffausschluss, in der unter Aufrechterhaltung der Druckbeaufschlagung ein form- und kraftschlüssiger Kontakt mit den Wänden des Reaktionsgefäßes sichergestellt ist, und mit mindestens einer Hochtemperaturzone, in der aus dem Entsorgungsgut Synthesegas erzeugt und eine gasdurchlässige Schüttung sowie eine oberhalb der Schüttung befindliche Stabilisierungszone für die Synthesegase ausbildet, durchläuft, und das erzeugte Synthesegas aus der Stabilisierungszone abgeleitet wird,
**dadurch gekennzeichnet, dass** beim Abfahren des Prozesses die Zufuhr an Entsorgungsgut zu dem Reaktionsgefäß beendet wird und bei Unterschreiten einer bestimmten Produktionsrate an Synthesegas in die Stabilisierungszone Sauerstoff eingedüst wird und die Abgase gegebenenfalls nach einer Schnellabkühlung über einen Schornstein abgeleitet werden.

2. Verfahren nach dem vorhergehenden Anspruch, **dadurch gekennzeichnet, dass** Sauerstoff im Überschuss eingedüst wird.

3. Verfahren nach einem der beiden vorhergehenden Ansprüche, **dadurch gekennzeichnet, dass** Sauerstoff derart im Überschuss eingedüst wird, dass im Abgas ein Restsauerstoffgehalt von mindestens 5 % enthalten ist.

4. Verfahren nach einem der Ansprüche 1 bis 3, **dadurch gekennzeichnet, dass** bei Aufrechterhaltung des Sauerstoffüberschusses in die Schüttung Brenngas eingeleitet wird, bis die anorganischen Bestandteile der Schüttung weitgehend ausgeschmolzen sind.

5. Verfahren nach einem der Ansprüche 1 bis 4, **dadurch gekennzeichnet, dass** die Abgase vor der Ableitung über den Schornstein in einer Brennkammer nachverbrannt werden.

6. Verfahren nach einem der Ansprüche 1 bis 5, **dadurch gekennzeichnet, dass** zu Beginn des Abfahrens die Leitung zum Schornstein inertisiert, insbesondere mit Stickstoff geflutet, wird.

7. Verfahren nach einem der Ansprüche 1 bis 6, **dadurch gekennzeichnet, dass** die Sauerstoffzufuhr in die Stabilisierungszone kontinuierlich reduziert wird, sobald der im Reaktionsgefäß befindliche Müllvollständig ent- bzw. vergast und die Schmelze erstarrt sind.

8. Verfahren nach einem der vorhergehenden Ansprüche,
**dadurch gekennzeichnet, dass** die Schadstoffkonzentrationen im Schornstein kontinuierlich gemessen werden.

9. Verfahren nach einem der vorhergehenden Ansprüche,
**dadurch gekennzeichnet, dass** im Normalbetrieb zumindest die Niedertemperaturstufe unter Aufrechterhaltung der Druckbeaufschlagung in formund kraftschlüssigem Kontakt mit den Wänden des Reaktorgefäßes unter Sauerstoffabschluss durchlaufen wird.

10. Verfahren nach einem der vorhergehenden Ansprüche,
**dadurch gekennzeichnet, dass** im Normalbetrieb die Niedertemperaturstufe im Temperaturbereich zwischen 100° C und 600° C durchlaufen wird.

11. Verfahren nach einem der vorhergehenden Ansprüche,
**dadurch gekennzeichnet, dass** im Normalbetrieb die Hochtemperaturstufe unter Sauerstoffzugabe durchlaufen wird.

12. Verfahren nach dem vorhergehenden Anspruch, **dadurch gekennzeichnet, dass** im Normalbetrieb die Kohlenstoffanteile in der Schüttung durch dosierte Zugabe von Sauerstoff zu Kohlendioxid vergast werden, und dass das Kohlendioxid beim Durchdringen der kohlenstoffhaltigen Schüttung in Kohlenmonoxid reduziert wird.

13. Verfahren nach einem der vorhergehenden Ansprüche,
**dadurch gekennzeichnet, dass** im Normalbetrieb die Hochtemperaturstufe bei Temperaturen von mehr als 1000° C durchlaufen wird.

14. Verfahren nach einem der vorhergehenden Ansprüche,
**dadurch gekennzeichnet, dass** das abgeleitete Synthesegas bzw. die Abgase unmittelbar nach Verlassen des Hochtemperaturreaktors einer Wasserbeaufschlagung zur schockartigen Abkühlung unter 100° C unterworfen und dabei entstaubt werden.
